# EUROPEAN PATENT SPECIFICATION

(11) **EP 1 614 652 B1**
(45) Date of publication and mention of the grant of the patent: **09.12.2009**
(21) Application number: 05105500.2
(22) Date of filing: 21.06.2005
(51) Int. Cl.: B67D 1/08

(54) **Device for offering goods for sale**
Vorrichtung zur Darbietung von Verkaufsgütern
Dispositif pour la présentation à la vente d'articles

(30) Priority: 06.07.2004 NL 1026586
(43) Date of publication of application: 11.01.2006
(73) Proprietor: Analbers, Joery Bas Daniël, 7141 PG Groenlo (NL)
(72) Inventor: Analbers, Bjorn Anthony, 7141 DG Groenlo (NL)
(74) Representative: Schumann, Bernard Herman Johan

(56) References cited:
- EP-A- 0 583 497
- WO-A-00/56657
- DE-U1- 8 716 284
- DE-U1- 9 310 614
- FR-A- 2 799 537
- US-A- 3 950 004
- US-A- 4 529 009
- US-A- 6 047 866
- US-B1- 6 220 610

## Description

The invention relates to a device for offering goods for sale, such as articles or products, for instance food or drinks, which device comprises a frame for carrying the goods and for displacing the goods by human muscle power, which frame in a rest position is carried in stable manner by at least two first wheels which can be rolled over the ground and by a support member supporting on the ground, and is provided with at least one handle, using which forces can be exerted on the frame for the purpose of displacing the frame in rolling manner by means of the two wheels, this such that together with the at least two wheels and the at least one handle the frame forms a manually displaceable cart.

A device of the type stated in the first paragraph is for instance known from WO-A-00/566 57. The device known from this publication has a centre of gravity lying roughly halfway along the distance between the axis of the first wheels and the support member. In the case where the operating person wishes to displace the cart in rolling manner over two wheels, he/she can tilt the cart towards him/her. In the case the cart is loaded, this requires much force and is therefore impractical.

Another device of the type stated in the first paragraph is known from DE-U-8716284, which forms the closest prior art.

In respect of the above, the invention provides a device of the described type which has the feature that the centre of gravity of a cart loaded with goods is situated above a point which is not further removed from the axis of the first wheels than about 1/3 of the distance between this axis and the position of the support member, and that it has carrier means which are adapted to carry a barrel of beer, a cylinder with carbon dioxide and a beer tap with drip tray, and a beer conduit which is connected or can be connected between the barrel and the tap extends at least partially through a tube forming part of a tube frame.

The support member can comprise a support surface which extends downward under the cart and which is for instance arranged on the end of a leg. For travel of the cart, the cart must in such an embodiment be tilted slightly to lift the support member clear of the ground. Tilting of the cart is however not always practical. The support surfaces on which the goods are carried thereby assume an inclining position, whereby loading thereof requires special provisions so as to ensure that when the cart is tilted the goods do not fall on the ground or otherwise start shifting in undesirable manner.

Likewise known from EP-A-583 497 is a rollable device for transporting and dispensing drinks. This device is embodied as a hand-truck and can only be transported by first tilting the cart. The centre of gravity here lies so far to the front that it is not possible to prevent an impact occurring when the cart is tilted back again into a stable rest position. Because of the tilting capability there is the possibility of liquid carbon dioxide from the carbon dioxide cylinder finding its way into the drink. This is technically very disadvantageous, since undesirably large pressure fluctuations can hereby occur. It is further possible that carbon dioxide in the drink is unintentionally released due to the impact forces.

In this respect an embodiment is recommended in which the support member comprises at least one second wheel.

The latter embodiment can advantageously have the special feature that the two first wheels are situated on the rear side of the cart directed toward the handle, and the at least one second wheel is situated on the front side. With these measures the cart is carried in stable rolling manner.

The latter embodiment preferably has the special feature that the first wheels have a fixed common axis extending transversely of the direction of the rolling displacement, and the at least one second wheel is a swivel wheel. Not only does this ensure sufficient stability under practically all conditions, but also an excellent pivoting, control and displaceability.

In order to ensure that the device can roll easily over a somewhat irregular ground, for instance grass, paving stones or sand, according to yet another aspect of the invention the device can have the special feature that at least the first wheels are of the type with pneumatic tyres. Particularly for a rather irregular ground surface it is recommended that the pneumatic tyres are only pumped to medium hardness, so that a good suspension is ensured. Conversely, the air pressure in the tyres should not be so low that this adversely affects the stability of the cart. In this respect it is also pointed out that, in accordance with the design of the cart, loading of the cart preferably takes place such that the centre of gravity is situated as low as possible.

Very simple is an embodiment in which at least the first wheels are commercially available wheelbarrow wheels. These wheels are relatively wide, whereby a relatively large contact surface with the ground is realized. They are moreover widely available and inexpensive.

The device is such that the frame is provided with carrier means, for instance at least one carrier board, for carrying the goods or components for use for assembling thereof, for instance a barrel with drink, a cylinder with carbon dioxide, crockery, cutlery and the like.

An embodiment can have the special feature that the carrier means are adapted to carry a cylinder with carbon dioxide, and a screen is arranged in order to at least visually conceal this cylinder and the accessories associated therewith, such as hoses, a pressure-reducing valve, hose couplings and the like.

According to yet another aspect of the invention, the device has the special feature that the cart is or can be provided with an upward extending rod for carrying a sign, a flag and/or a lamp or the like. A sign can for instance serve for presenting advertising messages, for instance brands of the goods sold, a flag can serve as an indication of the location of the vending device according to the invention, and a lamp can for instance be a flashing light or a stroboscopic lamp, whereby the public has its attention drawn to the presence of the vending cart according to the invention, particularly in relatively dark conditions.

The tap can be coupled mechanically to the tube frame and comprise a rigid conduit releasable therefrom. As is the case with known stationary tap devices in for instance bars, the tap is situated above the drip tray.

Attention is drawn to the fact that the volume of the barrel of beer could for instance be in the order of 50 litres. This weight would not be displaceable with a known device carried on the back. The barrel is placed above the rear wheels, while the carbon dioxide cylinder is disposed in the vicinity of the front wheel or the front wheels, between these wheels and the rear wheels. The heaviest weight therefore rests on the rear wheels, which for this reason usually take a larger form than the front wheel, which can advantageously be a swivel wheel.

Attention is further drawn to the fact that, in addition to a beer tap on a rigid conduit, use can also be made of soft drink taps which are connected in per se known manner to flexible conduits.

In order to ensure that the drink, which is cooled when placed on the cart, does not warm up too much prior to sale, particularly when consumption is low, the device can be embodied in a preferred embodiment such that it is provided with at least one conduit for cooled drink, for instance soft drink, water or beer, which hose is enclosed by a thermally insulating sheath.

In a determined embodiment the device comprises cooling means for cooling the goods. Such cooling means can be based on a normal cooling cycle with a compressor and an evaporator, on evaporating cooling or on any other appropriate cooling principle.

With the rapid sale of the goods anticipated for this type of device following loading of the cart, it will be recommended in practice to make use of only a thermal insulation for thermal insulation of goods.

With a view to safety, the device according to the invention can be further provided with braking means which are in engagement under normal conditions, i.e. in a stationary position of the cart, and are only released and kept released when the vendor continuously performs a specific operation for this purpose. Such an embodiment has the special feature that a brake which is engaged when at rest is added to at least one wheel, which brake can be disengaged by operating counter to a resetting force, for instance a spring force, a control member present on the at least one handle, for instance a handle as of a caliper brake or a pivotable pushing member which also forms part of the handle, or forms the handle.

As a simple alternative it is also possible to envisage a foot-operated blocking device with two stable positions, in the one of which the brake engages on a wheel and in the other of which the brake is out of engagement with the wheel.

The device according to the invention is able to transport the cylinder filled with liquid carbon dioxide in substantially upright and stable manner.

When a cylinder at least partly filled with liquid carbon dioxide is warmed, a pressure increase occurs. Since this takes place for instance when such a pressure cylinder carried by the device is exposed to direct solar radiation, an embodiment is recommended but here not claimed which is provided with screen means for shielding a cylinder filled with liquid carbon dioxide against direct solar radiation.

The invention will now be elucidated on the basis of the accompanying drawings of a random exemplary embodiment, to which the invention is not limited. In the drawings the same or corresponding components are designated in each case with the same reference numerals. In the drawings:

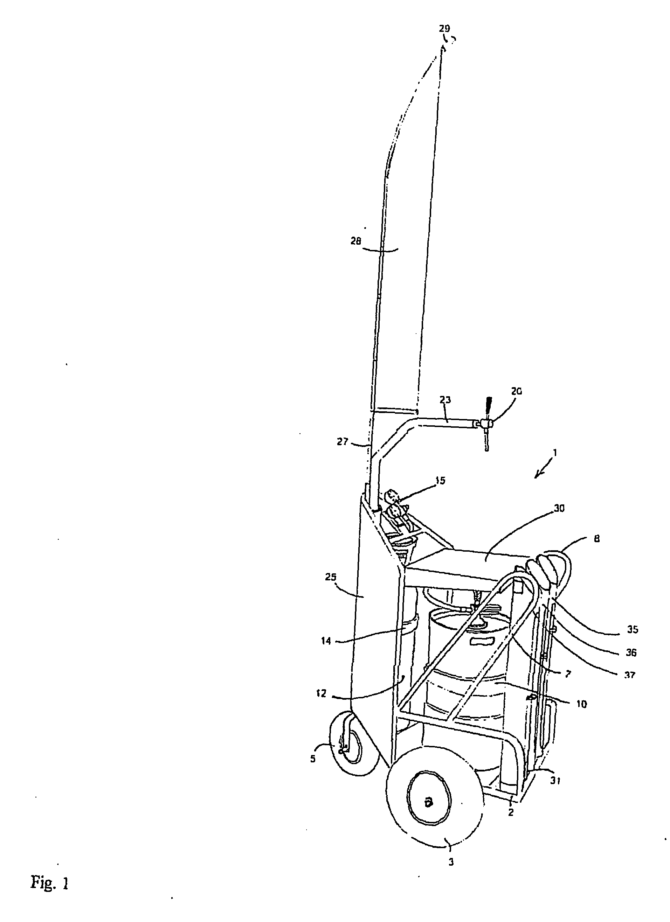

Fig. 1 shows a perspective view of a device according to the invention, as seen at an angle from the rear;

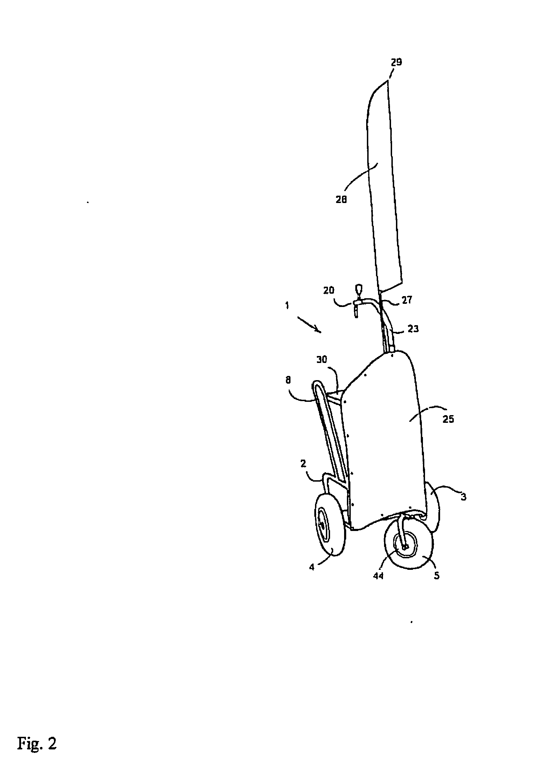

Fig. 2 shows a perspective view of the device according to Fig. 1 as seen at an angle from the front;
Fig. 3 shows an exploded view of the device;

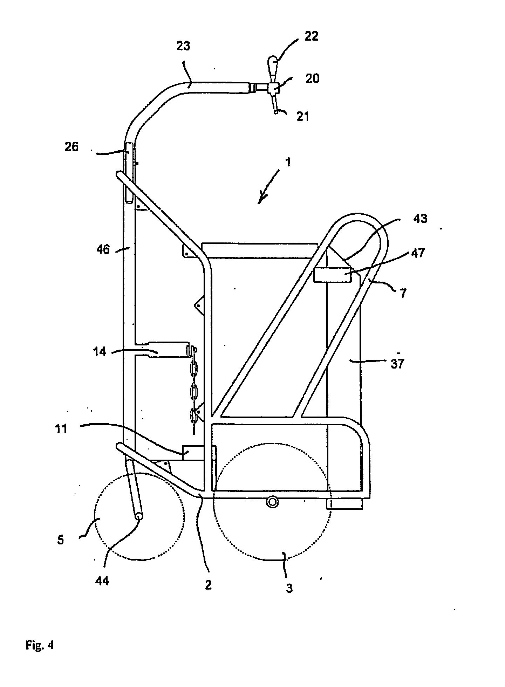

Fig. 4 is a side view of the device with the front screen removed;
Fig. 5 shows a cross-section of the device with the front screen removed;

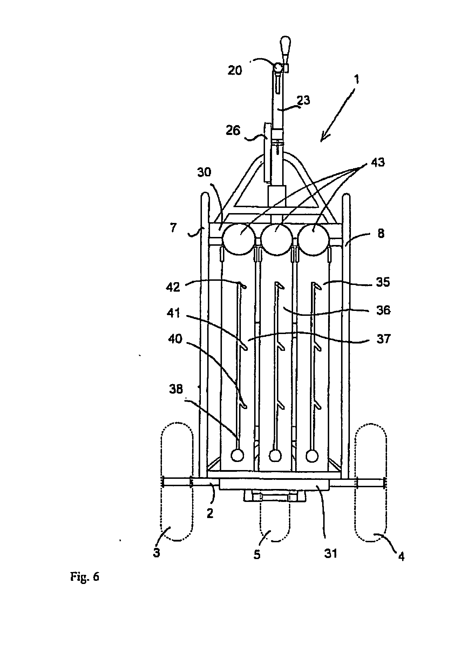

Fig. 6 is a rear view of the device;

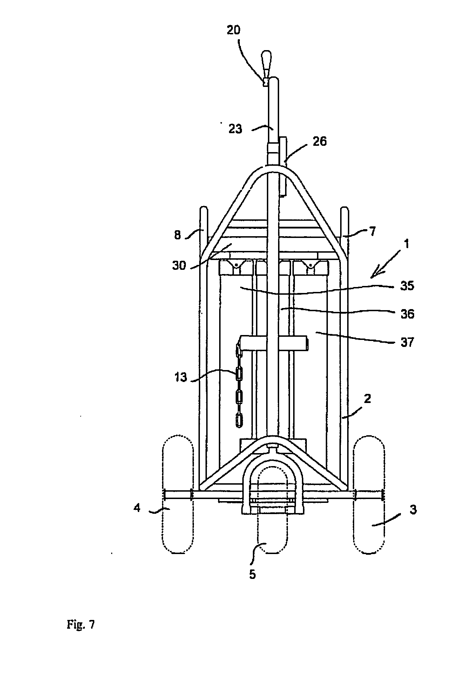

Fig. 7 is a front view of the device with the front screen removed; and
Fig. 8 shows a top view of the device.

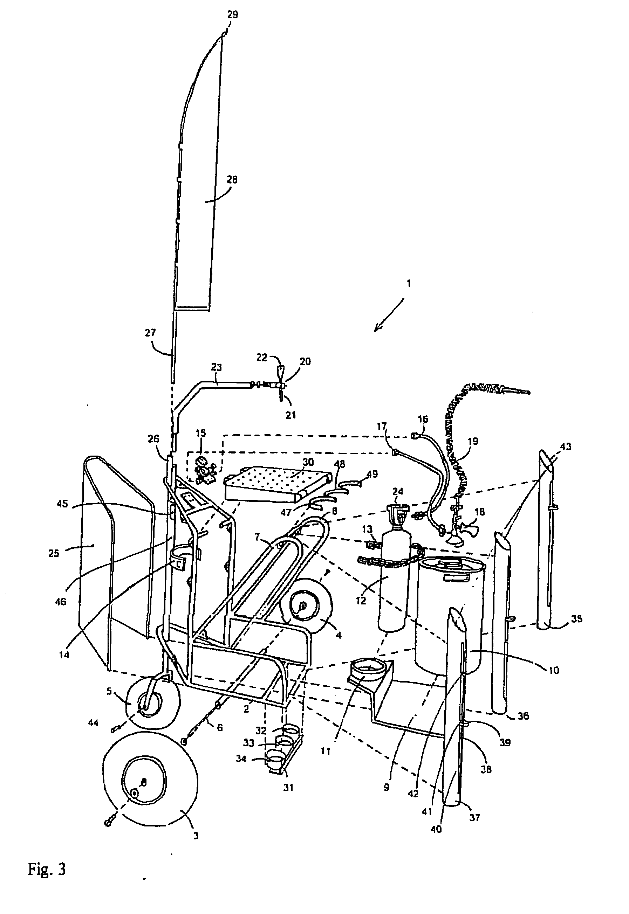

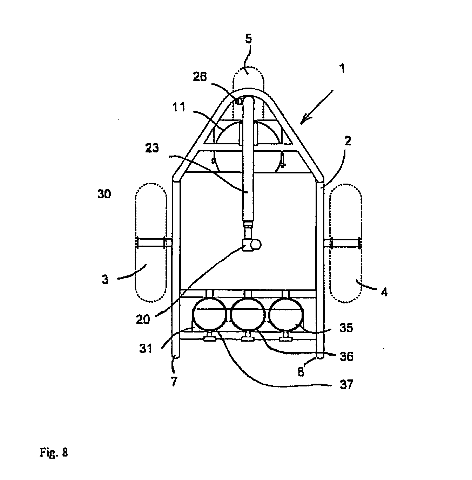

By way of random example of the principle according to the invention, the figures all show a device 1 for offering beer for sale. Device 1 comprises a unitary tube frame 2, i.e. consisting of an inseparable whole, which bears two wheelbarrow wheels 3, 4 for rotation at its rear as well as a swivel wheel 5 of small diameter situated on the front side of frame 2. All wheels are of the type with a pneumatic tyre. Wheels 3, 4 are rotatable around one common rotation axis 6 (see, among others, Fig. 3). Device 1 can be placed on a ground surface in stable manner by means of the three wheels 3, 4, 5 which are disposed in a general triangular form (see Fig. 8).

Further forming part of tube frame 2 are two bent tubes 7, 8 which are each bent through 180° and thus form two handles for moving the device 1.

Frame 2 supports inter alia a carrier board 9 on which a beer barrel 10 can be placed, this in a position such that the centre of gravity of the barrel is situated substantially above axis 6. Carrier board 9 further has an annular support 11 for accommodating a cylinder 12 for compressed carbon dioxide. This can be fixed to tube frame 2 by means of a chain 13 such that cylinder 12 is held with its top side in upright position by a substantially divided bracket 14 which can be closed to form an annular shape. Tube frame 2 further bears a unit 15 with a pressure-reducing valve and a manometer for reducing the pressure of the carbon dioxide from cylinder 12 to a value of about 0.8 bar - 1.0 bar, and for measuring thereof and displaying the measured value. For this purpose the unit 15 is connected to the inlet of unit 15 by means of a first carbon dioxide hose 16, while the outlet of unit 15 is connected via a second carbon dioxide hose 17 to a connecting unit 18 for coupling to barrel 10. The outlet of the barrel, through which beer can be dispensed under the influence of the pressure of the carbon dioxide from second hose 17, is connected indirectly to a beer tap 20 with a tap nozzle 21 and an operating handle 22 via a beer hose 19 with a thermally insulating sheath, which tap is carried by a tube 23 which can be coupled releasably to outer frame 2 and which is bent through 90°, and through which the insulated beer conduit 19 extends via an opening present in tube 46.

Barrel 10 is optionally provided in the factory with a thermally insulating jacket, for instance comprising a layer of polyurethane foam, expanded polystyrene foam or other suitable heat-insulating material. The beer placed in device 1 in pre-cooled state, for instance at a temperature of about 3°C, is thus prevented from undergoing any substantial warming before barrel 10 has been completely emptied. In this respect it is also important that conduit 19 is also well insulated. The beer which is not moving in this conduit between two tap operations is also subject to warming, and in the case of long periods between two tap operations there is therefore a real danger of the beer in this conduit warming substantially when conduit 19 is not, or poorly, insulated while the beer in barrel 10 nevertheless continues to retain a temperature below a determined value.

By way of optical enhancement, and also in order to screen from view and contact components possibly entailing a safety risk, in particular the carbon dioxide cylinder, the connection 24 thereof, the carbon dioxide conduits 16 and 17 and unit 15, the front side of the frame is covered by means of a screen 25 bent into an aesthetically attractive shape.

The frame supports an upward extending tube stump 26 in which a rod 27 can be inserted, which in this embodiment carries a flag 28 and a stroboscopic lamp 29.

The frame further bears a releasable drip tray 30 which is situated roughly centrally under the nozzle 21 of tap 20.

Tube frame 2 further bears a carrier unit 31 with three annular supports 32, 33, 34 for carrying generally cylindrical cup tubes 35, 36, 37 respectively, which are carried on carrier board 9 and are held in position by supports 32, 33, 34 and at their top sides by clamps 47, 48, 49 which are mounted releasably on tube frame 2.

Each of the cup tubes 35, 36, 37 has on its front side an open slot through which protrudes an operating lip 39 which is connected to a support for a stack of cups which is movable vertically in the relevant cup tubes 35, 36, 37 such that, by moving lip 39 up and downward, the relevant stack of cups is displaced correspondingly up and downward. In this embodiment the lip 39 can hook into side slots 40, 41, 42 at three different positions, whereby the stack of cups can be fixed at the associated height. The cups are placed with the open side downward in holders 35, 36, 37 so that the vendor can always grasp the bottom of the uppermost cup easily via mouth opening 43 of the relevant cup tube 35, 36, 37.

Not drawn are braking means which ensure that at least one of the wheels is blocked against rotation in the rest position of device 1. Such a brake can engage in braking manner on a wheel under the influence of a compression spring in normal, non-operated conditions, while the braking action is discontinued by operating for instance a brake handle on one of the handles 7, 8. It is also possible to envisage an embodiment in which handles 7, 8 are for instance jointly pivotable in their vertical main plane and that the braking action is ended by pushing in the direction of displacement of device 1.

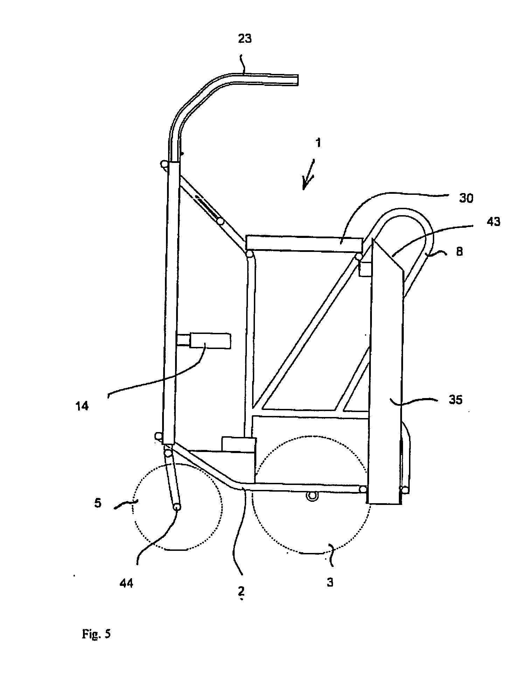

The centre of gravity of the fully loaded device is situated above a point which is removed no further from the axis 6 of the first wheels 3, 4 than about 1/3 of the distance between this axis 6 and the position of axis 44 of swivel wheel 5 in the rolling position as according to Fig. 5.

## Claims

1. Device (1) for offering goods for sale, such as articles or products, for instance food or drinks, which device comprises a frame (2) for carrying the goods and for displacing the goods by human muscle power, which frame (2) in a rest position is carried in stable manner by at least two first wheels (3, 4) which can be rolled over the ground and by a support member (5) supporting on the ground, and is provided with at least one handle (7, 8), using which forces can be exerted on the frame (2) for the purpose of displacing the frame in rolling manner by means of the at least two first wheels (3, 4), this such that together with the at least two first wheels (3, 4) and the at least one handle the frame forms a manually displaceable cart, the frame being provided with carrier means (9),
and the frame (2) being a unitary tube frame;
**characterized in that**
the centre of gravity of a cart loaded with goods is situated above a point which is not further removed from the axis of the at least two first wheels (3,4) than about 1/3 of the distance between this axis (6) and the position of the support member, for instance the axis of the at least one second wheel (5),
and
the carrier means (9) are adapted to carry a barrel (10) of beer, a cylinder (12) with carbon dioxide and a beer tap (20, 21, 22) with drip tray (30), and that a beer conduit (19) which is connected or can be connected between the barrel (10) and the tap (20, 21, 22) extends at least partly through a tube forming part of the tube frame (2).

2. Device (1) as claimed in claim 1, wherein the support member comprises at least one second wheel (5).

3. Device (1) as claimed in claim 2, wherein the two first wheels (3, 4) are situated on the rear side of the cart directed toward the handle (7, 8), and the at least one second wheel (5) is situated on the front side.

4. Device (1) as claimed in claim 3, wherein the first wheels (3, 4) have a fixed common axis extending transversely of the direction of the rolling displacement, and the at least one second wheel (5) is a swivel wheel.

5. Device (1) as claimed in claim 1, wherein at least the first wheels (3, 4) are of the type with pneumatic tyres.

6. Device (1) as claimed in claim 5, wherein at least the first wheels (3, 4) are commercially available wheelbarrow wheels.

7. Device (1) as claimed in claim 1, wherein the carrier means are adapted to carry a cylinder (12) with carbon dioxide, and a screen (25) is arranged in order to at least visually conceal this cylinder (12) and the accessories associated therewith, such as hoses, a pressure-reducing valve, hose couplings and the like.

8. Device (1) as claimed in any of the foregoing claims, wherein the cart is or can be provided with an upward extending rod (27) for carrying a sign, a flag (28) and/or a lamp or the like.

9. Device (1) as claimed in any of the foregoing claims, comprising at least one conduit (19) for cooled drink, for instance soft drink, water or beer, which conduit is enclosed by a thermally insulating sheath.

10. Device (1) as claimed in any of the foregoing claims, comprising cooling means for cooling the goods.

11. Device (1) as claimed in any of the foregoing claims, comprising a thermal insulation for thermal insulation of goods.

12. Device (1) as claimed in any of the foregoing claims, wherein a brake which is engaged when at rest is added to at least one wheel, which brake can be disengaged by operating counter to a resetting force, for instance a spring force, a control member present on the at least one handle, for instance a handle as of a caliper brake or a pivotable pushing member which also forms part of the handle, or forms the handle.

## Patentansprüche

1. Vorrichtung (1) zum Anbieten von Waren zum Verkauf, wie Artikel oder Erzeugnisse, z.B. Nahrungsmittel oder Getränke, welche Vorrichtung einen Rahmen (2) zum Tragen der Waren und zum Verschieben der Waren durch menschliche Muskelkraft aufweist, welcher Rahmen (2) in einer Ruhestellung in stabiler Weise durch wenigstens zwei erste Räder (3, 4), die über den Boden gerollt werden können, und durch ein Stützglied (5) getragen wird, das auf dem Boden abstützt, und mit wenigstens einem Handgriff (7, 8) versehen ist, durch den Kräfte auf den Rahmen (2) für den Zweck ausgeübt werden können, den Rahmen in rollender Weise mithilfe der wenigstens zwei ersten Räder (3, 4) zu verschieben, dies so, dass zusammen mit den wenigstens zwei ersten Rädern (3, 4) und dem wenigstens einen Handgriff der Rahmen einen von Hand verschiebbaren Wagen bildet, wobei der Rahmen mit Trägermitteln (9) versehen ist und der Rahmen (2) ein unitärer Röhrenrahmen ist, **dadurch gekennzeichnet, dass** der Schwerpunkt eines Wagens, der mit Waren beladen ist, oberhalb eines Punktes angeordnet ist, der nicht weiter von der Achse der wenigstens zwei ersten Räder (3, 4) als ungefähr 1/3 des Abstands zwischen dieser Achse (6) und der Position des Stützglieds entfernt ist, z.B. in der Achse des wenigstens einen zweiten Rades (5), und dass die Trägermittel (9) dazu ausgebildet sind, ein Bierfass (10), einen Zylinder (12) mit Kohlenstoffdioxid und einen Bierzapfhahn (20, 21, 22) mit einer Tropfschale (30) zu tragen, und dass eine Bierleitung (19), die zwischen dem Fass (10) und dem Zapfhahn (20, 21, 22) verbunden ist oder verbunden werden kann, sich wenigstens teilweise durch eine Röhre erstreckt, die Teil des Röhrenrahmens (2) bildet.

2. Vorrichtung (1) nach Anspruch 1, bei der das Stützglied wenigstens ein zweites Rad (5) aufweist.

3. Vorrichtung (1) nach Anspruch 2, bei der die ersten zwei Räder (3, 4) an der zum Handgriff (7, 8) gerichteten Rückseite des Wagens angeordnet sind, und dass das wenigstens eine zweite Rad (5) an der Vorderseite angeordnet ist.

4. Vorrichtung (1) nach Anspruch 3, bei der die ersten Räder (3, 4) eine feste gemeinsame Achse aufweisen, die sich quer zur Richtung der rollenden Verschiebung erstreckt, und das wenigstens eine zweite Rad (5) ein Schwenkrad ist.

5. Vorrichtung (1) nach Anspruch 1, bei dem die ersten Räder (3, 4) des Typs mit pneumatischen Reifen sind.

6. Vorrichtung (1) nach Anspruch 5, bei der die ersten Räder (3, 4) kommerziell erhältlich Schubkarrenräder sind.

7. Vorrichtung (1) nach Anspruch 1, bei der die Trägermittel dazu ausgebildet sind, einen Zylinder (12) mit Kohlenstoffdioxid zu tragen, und eine Abschirmung (25) vorgesehen ist, um wenigstens teilweise visuell diesen Zylinder (12) und die damit verknüpften Zubehörteile zu verbergen, wie z.B. Schläuche, ein Druckreduzierventil, Schlauchkupplungen und dergleichen.

8. Vorrichtung (1) nach einem der vorangehenden Ansprüche, bei der der Wagen mit einer sich nach oben erstreckenden Stange (27) zum Tragen eines Zeichens, einer Flagge (28) und/oder einer Lampe oder dergleichen versehen ist oder versehen werden kann.

9. Vorrichtung (1) nach einem der vorangehenden Ansprüche, die wenigstens eine Leitung (19) für ein gekühltes Getränk, z.B. einen Softdrink, Wasser oder Bier, aufweist, welche Leitung durch eine thermisch isolierende Abschirmung eingeschlossen ist.

10. Vorrichtung (1) nach einem der vorangehenden Ansprüche, die Kühlmittel zum Kühlen der Waren aufweist.

11. Vorrichtung (1) nach einem der vorangehenden Ansprüche, die eine thermische Isolierung für thermische Isolierung von Waren aufweist.

12. Vorrichtung (1) nach einem der vorangehenden Ansprüche, bei der eine Bremse, die im Ruhezustand in Eingriff ist, wenigstens einem Rad hinzugefügt ist, welche Bremse durch Betätigung gegen eine Rückstellkraft, z.B. eine Federkraft, ein Steuerglied, das an dem wenigstens einen Handgriff vorhanden ist, z.B. ein Handgriff wie z.B. einer Sattelbremse, oder ein schwenkbares Stoßglied lösbar ist, das auch Teil des Handgriffs bildet oder den Handgriff bildet.

## Revendications

1. Dispositif (1) pour présenter des marchandises à la vente, comme des articles ou des produits, par exemple des aliments ou des boissons, ledit dispositif comprenant un cadre (2) pour porter les marchandises et pour déplacer les marchandises par la puissance musculaire humaine, ledit cadre (2) étant porté, dans une position de repos, d'une manière stable par au moins deux premières roues (3, 4) qui peuvent rouler sur le sol et par un élément de support (5) qui le supporte sur le sol, et étant pourvu d'au moins une poignée (7, 8) qui lorsqu'on l'utilise permet d'exercer des forces sur le cadre (2) dans le but de déplacer le cadre en roulant au moyen desdites au moins deux premières roues (3, 4), et cela de telle façon qu'ensemble avec lesdites au moins deux premières roues (3, 4) et ladite au moins une poignée le cadre forme un chariot manuellement déplaçable, le cadre étant pourvu de moyens porteurs (9), et le cadre (2) étant un cadre unitaire en tube ;
**caractérisé en ce que**
le centre de gravité d'un chariot chargé avec des marchandises est situé au-dessus d'un point qui n'est pas éloigné plus loin de l'axe desdites au moins deux premières roues (3, 4) qu'environ un tiers de la distance entre cet axe (6) et la position de l'élément de support, par exemple l'axe de ladite au moins une seconde roue (5) ;
et les moyens porteurs (9) sont adaptés à apporter un tonneau (10) de bière, un cylindre (12) chargé de dioxyde de carbone, et un robinet à bière (20, 21, 22) avec un plateau à gouttes (30), et **en ce qu'**un conduit à bière (19) qui est connecté ou peut être connecté entre le tonneau (10) et le robinet (20, 21, 22) s'étend au moins partiellement à travers un tube faisant partie du cadre tubulaire (2).

2. Dispositif (1) selon la revendication 1, dans lequel l'élément de support comprend au moins une seconde roue (5).

3. Dispositif (1) selon la revendication 2, dans lequel les deux premières roues (3, 4) sont situées sur le côté arrière du chariot dirigé vers la poignée (7, 8), et ladite au moins une seconde roue (5) est située sur le côté avant.

4. Dispositif (1) selon la revendication 3, dans lequel les premières roues (3, 4) ont un axe commun fixé qui s'étend transversalement à la direction du déplacement en roulement, et ladite au moins une seconde roue (5) est une roue pivotante.

5. Dispositif (1) selon la revendication 1, dans lequel au moins les premières roues (3, 4) sont du type avec des bandages pneumatiques.

6. Dispositif (1) selon la revendication 5, dans lequel au moins les premières roues (3, 4) sont des roues de brouette disponibles dans le commerce.

7. Dispositif (1) selon la revendication 1, dans lequel les moyens porteurs sont adaptés à apporter un cylindre (12) chargé de dioxyde de carbone, et un écran (25) est agencé au moins afin de dissimuler visuellement ce cylindre (12) et les accessoires associés à celui-ci, comme des tuyaux, un clapet réducteur de pression, des raccords à tuyaux, et similaires.

8. Dispositif (1) selon l'une quelconque des revendications précédentes, dans lequel le chariot est pourvu ou peut être pourvu d'une barre (27) s'étendant vers le haut, afin de porter un signe, un drapeau (28) et/ou une lampe ou similaire.

9. Dispositif (1) selon l'une quelconque des revendications précédentes, comprenant au moins un conduit (19) pour une boisson rafraîchie, par exemple une boisson non alcoolisée, de l'eau ou de la bière, ledit conduit étant enfermé par une gaine thermiquement isolante.

10. Dispositif (1) selon l'une quelconque des revendications précédentes, comprenant des moyens de refroidissement pour refroidir la marchandise.

11. Dispositif (1) selon l'une quelconque des revendications précédentes, comprenant une isolation thermique pour l'isolation thermique des marchandises.

12. Dispositif (1) selon l'une quelconque des revendications précédentes, dans lequel un frein, qui est engagé au repos, est ajouté à au moins une roue, ledit frein pouvant être dégagé en actionnant à l'encontre d'une force de rappel, par exemple une force élastique, un élément de commande présent sur ladite au moins une poignée, par exemple une manette comme celle d'un frein à étrier ou un élément de poussée pivotant qui fait également partie de la poignée, ou qui forme la poignée.
